# EUROPEAN PATENT APPLICATION

(11) **EP 2 389 022 A1**
(43) Date of publication of application: **23.11.2011**
(21) Application number: 09843903.7
(22) Date of filing: 23.09.2009
(51) Int. Cl.: H04W 8/00

(54) **A METHOD AND SYSTEM FOR INFORMING THE UPDATING OF THE LOCATION SERVICES ASSISTANCE DATA**

(30) Priority: 30.04.2009 CN 200910136177
(71) Applicant: ZTE Corporation, Shenzhen, Guangdong 518057 (CN)
(72) Inventor: HUANG, Bo, Shenzhen Guangdong 518057 (CN); WU, Hao, Shenzhen Guangdong 518057 (CN)
(74) Representative: Manitz, Finsterwald & Partner GbR
(86) International application number: PCT/CN2009/074150
(87) International publication number: WO 2010/124491

(57) **Abstract**

The present invention provides a method for notifying the updating of location service auxiliary data. The network side sends downwardly a paging message to a terminal, and the paging message carries the notification information which indicates whether the location service auxiliary data is updated or not, and then the terminal determines whether it is needed to obtain the location service auxiliary data or not according to the notification information. When the LCS auxiliary data is sent downwardly in the form of a system message and the LCS system message is modified, namely updated, the method and system for notifying the updating of the location service auxiliary data of the present invention can timely notify UE to obtain the LCS auxiliary data.

## Description

### Filed of the Invention

The present invention relates to the communication field, in particular to a method and a system for notifying the updating of location service (LCS) auxiliary data in LTE.

### Background of the Invention

Abbreviations used herein are firstly defined as follows:
3GPP - 3rd Generation Partnership Project, advanced 3G technical specification formulating organization.
A-GPS-Assisted Global Positioning Systems.
eNB - Evolved NodeB
E-UTRA - Evolved-UTRA.
E-UTRAN - Evolved-UTRAN.
IP - Internet Protocol.
LCS - LoCation Services, which is established by QUALCOMM on 3GPP wireless plenary session, and is one of the main research topics of the LTE at present.
LTE - Long Term Evolution, which is a long term evolution program of a wireless access network started in December 2004 by 3GPP.
SAE - System Architecture Evolution.
UE - User Equipment.
UTRA - Universal Terrestrial Radio Access.
UTRAN - Universal Terrestrial Radio Access Network.

The current mobile communication technology faces the challenges of providing higher data speed for the user, and larger capacity and better coverage for network.

In order to solve the above-mentioned problems, 3GPP started the long term evolution (LTE) program of the wireless network in December 2004, evolved access technology E-UTRA, evolved access network E-UTRAN and packet domain core network evolved program SAE oriented to the full IP, hoping to provide better support for the continuously increased demands of the user and the operator through the continuous evolution and enhancement from the wireless interface to the core network and to keep the technical first-mover advantages in the mobile communication field in the next ten years or more than ten years.

Location service (LCS) is a newly value-added service provided by the mobile communication network. The service obtains the location information (longitude and latitude, moving speed and the like) of a mobile station through the wireless location technology, and provides the location information to the user himself/herself, the mobile communication network or other external entity and realizes the various services related to the location.

In the LTE system, the terminal can obtain the data for calculating the current location of the terminal by surveying the service cell or the neighboring cell or by a built-in location module surveying the satellite signal. Usually, the terminal needs the corresponding auxiliary data provided by the network to perform the survey process for supporting the location. If the terminal lacks the corresponding auxiliary data or does not obtain the latest auxiliary data, the terminal can not perform the correct and effective survey, therefore leading to the failure of the final location.

### Summary of the Invention

The present invention aims to solve the technical problem by providing a method and a system for notifying the updating of location service auxiliary data in order to timely notify the UE to obtain the LCS auxiliary data.

In order to solve the above-mentioned technical problem, the present invention provides a method for notifying the updating of location service auxiliary data, and the method comprises: sending downwardly by the network side a paging message to a terminal, the paging message carrying notification information used to indicate whether location service auxiliary data is updated or not; and determining by the terminal whether it is needed to obtain the location service auxiliary data or not according to the notification information.

Further, the notification information is implemented by using a flag bit wherein if the flag bit is true, it indicates that the location service auxiliary data has been updated; and if the flag bit is false, it indicates that the location service auxiliary data is not updated; and the step of determining by the terminal whether it is needed to obtain the location service auxiliary data or not according to the notification information is implemented by the following manners: if the terminal has a location service ability and the flag bit is true, the terminal determines that it is needed to obtain the location service auxiliary data; if the terminal has the location service ability and the flag bit is false, the terminal determines that it is not needed to obtain the location service auxiliary data; and if the terminal does not have the location service ability, the flag bit is ignored.

Further, the location service auxiliary data refers to a ephemeris chart, modified data or encrypted information during the positioning of a satellite, which is sent downwardly by the network side to the terminal in the form of a system message.

In order to solve the above-mentioned technical problem, the present invention provides a device for notifying the updating of location service auxiliary data, the device for notifying the updating of location service auxiliary data configured to send downwardly a paging message to the terminal, the paging message carrying notification information which is used to indicate whether location service auxiliary data is updated or not.. Further, the notification information is implemented by using a flag bit, wherein if the flag bit is true, it indicates that the location service auxiliary data is updated; and if the flag bit is false, it indicates that the location service auxiliary data is not updated.

Further, the location service auxiliary data is a ephemeris chart, modified data or encrypted information during the positioning of a satellite, which is sent to the terminal in the form of a system message by the device for notifying the updating of location service auxiliary data.

In order to solve the above-mentioned technical problem, the present invention provides a system for notifying the updating of location service auxiliary data, and the system comprises:
the device for notifying the updating of location service auxiliary data; and
a terminal, configured to receive a paging message sent downwardly by the device for notifying the updating of location service auxiliary data, and determine whether it is needed to re-obtain the location service auxiliary data or not according to notification information in the paging message.

Further, the notification information is implemented by using a flag bit, wherein if the flag bit is true, it indicates that the location service auxiliary data is updated; and if the flag bit is false, it indicates that the location service auxiliary data is not updated;
the terminal is further configured to determine that it is needed to obtain the location service auxiliary data when the terminal has a location service ability and the flag bit is true; configured to determine that it is not needed to obtain the location service auxiliary data when the terminal has the location service ability and the flag bit is false; and configured to ignore the flag bit when the terminal does not have the location service ability.

In order to solve the above-mentioned technical problem, the present invention provides a method for obtaining the location service auxiliary data. Sending by the network sides a paging message to a terminal, the paging message carrying a flag bit and the flag bit used for indicating whether the location auxiliary data is updated or not, wherein if the flag bit is true, it indicates that the location service auxiliary data is updated; otherwise, it indicates that the location service auxiliary data is not updated; and determining by the terminal whether it is needed to obtain the location service auxiliary data or not according to the flag bit.

Further, the step of determining by the terminal whether it is needed to obtain the location service auxiliary data or not according to the flag bit is implemented in following manner: if the terminal has a location service ability and the flag bit is true, the terminal determines that it is needed to obtain the location service auxiliary data; if the terminal has the location service ability and the flag bit is false, the terminal determines that it is not needed to obtain the location service auxiliary data; and if the terminal does not have the location service ability, the flag bit is ignored.

Further, after the step that the terminal determines that it is needed to obtain the location service auxiliary data according to the flag bit, the method further comprises that the terminal obtains the location service auxiliary data from system information sent by the network side.

Further, the system information is sent to the terminal by the network side via a broadcast channel; the system information comprises a system information block which carries the location service auxiliary data and a system information block 1; the step of obtaining by the terminal the location service auxiliary data from the system information comprises: the terminal reads scheduling information of the system information block which carries the location service auxiliary data through a scheduling information unit in the system information block 1, and reads the system information block which carries the location service auxiliary data according to the scheduling information to obtain the location service auxiliary data.

In order to solve the above-mentioned technical problem, the present invention provides a device for obtaining the location service auxiliary data. The device for obtaining location service auxiliary data configured to send a paging message to a terminal, wherein the paging message carries a flag bit used for indicating whether location service auxiliary data is updated or not wherein if the flag bit is true, it indicates that the location service auxiliary data is updated; otherwise, it indicates that the location service auxiliary data is not updated.

Further, the device for obtaining location service auxiliary data is further configured to send downwardly a system information block through a broadcast channel, the system information block comprising a system information block 1 and a system information block which carries location service auxiliary data.

The present invention also provides a system for obtaining the location service auxiliary data, and the system comprises:
the device for obtaining location service auxiliary data; and
a terminal, configured to receive a paging message sent by the device for obtaining the location service auxiliary data, and determine whether it is needed to obtain the location service auxiliary data or not according to a flag bit in the paging message, and read the system information block 1 when it is determined that it is needed to obtain the location service auxiliary data, and read a system information block which carries location service auxiliary data according to scheduling information in the system information block 1 to obtain the location service auxiliary data.

Compared with the prior art, by using the method and the system of the present invention, the UE can be timely notified to obtain the LCS auxiliary data if the LCS system message is modified, namely updated, under the condition that the LCS auxiliary data is sent downwardly in the form of a system message. At the same time, the method does not influence the modification notification of the existing system message, and for the UE which does not have the LCS ability, the system message of the LCS auxiliary data does not need to be read, thus saving the energy consumption of batteries.

### Brief Description of the Drawings

Fig.1 is a flowchart of notifying the updating of the location service auxiliary data according to the present invention.
Fig.2 is a flowchart of obtaining the system message which carries the location service auxiliary data according to the present invention.

### Preferable Implementation Mode of the Present Invention

The main idea of the method and the system for notifying the updating of location service (LCS) auxiliary data is as follows: the network side carries notification information, which indicates whether the location service auxiliary data is updated or not, in a paging message; and the terminal determines whether it is needed to obtain the location service auxiliary data or not according to the notification information.

Concretely, in the LET, under the condition that the LCS auxiliary data is sent downwardly in the form of a system message, the location auxiliary data updating notification is also called as the system message updating notification. When a system message related to the LCS is modified, namely updated, the flag bit(s) is added in the "Paging" message: LCS-Indication, indicating whether the system message related to the LCS is updated or not so as to timely notify the UE, wherein,
LCS-Indication being true: indicating that the system message related to the LCS is updated;
LCS-Indication being false: indicating that the system message related to the LCS is not updated.

In the LTE, if the system message related to the LCS is updated, the E-UTRAN sets the LCS-Indication field in paging message Paging as TRUE, and sends downwardly the Paging message for broadcasting it in the cell.

After the UE which has the LCS ability receives the Paging message, if the LCS-Indication is TRUE, it indicates that the system message related to the LCS auxiliary data is updated, and the UE reads the system message related to the LCS auxiliary data, which is used for the subsequent location, according to the scheduling (modulation) information block.

If the UE does not have the LCS ability, the LCS-Indication field in the paging message Paging is ignored.

If the UE which has the LCS ability reads that the LCS-Indication in the paging message Paging is false, it is not needed to re-obtain the system message related to the LCS auxiliary data in the cell broadcast.

The system message updating notification of LCS auxiliary data of the present invention will be detailed hereinafter in connection with the embodiments of the present invention.

The LCS uses one or more location methods to determine the user location. The process of determining the user location comprises the wireless signal survey and the location estimation calculation based on the survey, wherein the signal survey can be performed in the user terminal, the base station and the location survey unit, and the location estimation calculation can be performed in the user terminal or the wireless access network.

In the above-mentioned process, some auxiliary information is usually needed according to the different location methods in order to complete the location process, the auxiliary information such as the ephemeris chart, modified data, encrypted information and the like during the positioning of satellite. If the LCS auxiliary data is absent, or the latest LCS auxiliary data is not obtained, it can cause the failure of the location, and therefore the LCS function can not be realized.

The LCS auxiliary data may be updated frequently. If the LCS auxiliary data is sent downwardly in the form of a system message, when the LCS auxiliary data is updated, namely when the system message related to the LCS is updated, it is needed to timely notify the UE. When the updating notification of the system message related to the LCS is notified to the UE, the following points need to be considered:
1. the prior system message modification notification of the LTE shall not be influenced;
2. the UE which has the LCS ability shall be timely notified to obtain a system message when the system message related to the LCS is updated;
3. the UE which does not has the LCS ability has no need to read the LCS system message, which saves the energy consumption of batteries.

Based on the above descriptions, a method for notifying the updating of the LCS auxiliary data of the present invention is particularly provided, in which the paging message Paging carries the flag bit, LCS-Indication, to indicate whether the system message related to the LCS auxiliary data is updated or not.

The Paging message which the LCS-Indication flag bit is added into is as follows:

### Paging message

```
    - ASNISTART
    Paging : : = SEQUENCE {
    PagingRecordList PagingRecordList OPTIONAL, -- Need ON ....
    LCS-Indication ENUMERATED (true) OPTIONAL, --Need ON ....
    }
    - ASNISTOP
```

wherein LCS-Indication is as follows:

| LCS-Indication | Meanings |
|---|---|
| TRUE | The system message related to the LCS auxiliary data is updated. |
| FALSE | The system message related to the LCS auxiliary data is not updated. |

A-GPS location method will be detailed hereinafter in connection with the drawings:
The basic idea of the A-GPS is of establishing a GPS reference network (or a wide area differential GPS network). The receiver of the GPS reference network has clear view and continuous operation, and at the same time the reference network is connected with the mobile communication network LTE. According to the location requirements, the auxiliary data from the GPS reference network is transmitted to the UE in the form of a system message to improve the property of the LCS.

The A-GPS location method comprises the following steps.

Step 1, the GPS reference network detects in a certain time that the GPS ephemeris or the cycle time of the satellite is changed, and then the GPS reference network notifies the E-UTRAN network that the location auxiliary data is updated.

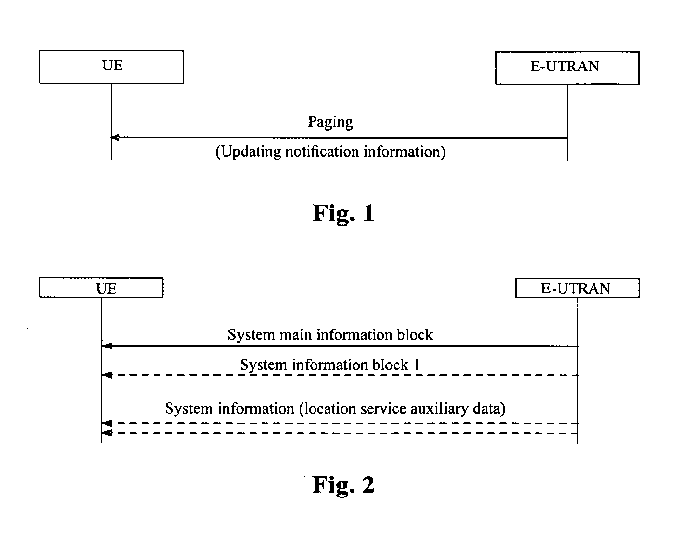

Step 2, after receiving the updating indication of the location auxiliary data, the E-UTRAN needs to notify the UE that the system information related to the LCS auxiliary data is updated. As shown in Fig. 1, the E-UTRAN sets the LCS-Indication in paging message Paging as TRUE, and broadcasts the paging message Paging in the cell(s).

Step 3, the UE which has the LCS ability monitors the paging message Paging wherein after receiving the Paging message on the paging scene, the UE detects the updating field LCS-Indication of the LCS system message wherein if the LCS-Indication is TRUE, it indicates that the system information related to the LCS auxiliary data is updated currently, and the UE needs to read the system information related to the LCS auxiliary data.

If the UE does not have the LCS ability, the LCS-Indication field in the paging message Paging is ignored.

If the UE which has the LCS ability reads that the LCS-Indication in the paging message Paging is FALSE, it indicates that the system information related to the LCS auxiliary data is not updated currently, and the UE has no need to re-obtain the system message related to the LCS auxiliary data in the cell broadcast.

Step 4, the UE obtains the LCS system information as shown in Fig.2. The UE inquires the system main information block in the broadcast channel, and reads the system information block 1 in the downlink shared channel. The scheduling (modulation) period of the system information block 1 and the system main information block are fixed and unnecessary to be obtained. The transmission time of the system information related to the LCS, such as the starting time, is obtained through the scheduling (modulation) information unit in the system information block 1. The UE reads and saves the system information related to the LCS auxiliary data according to the scheduling (modulation) information in the system information block 1, which is used for the subsequent location.

In order to realize the above method, the present invention also provides a system for notifying the updating of location service auxiliary data. The system comprises a system side and a terminal.

In the above, the system side is used for sending downwardly a paging message to the terminal, wherein the paging message carries notification information which indicates whether the location service auxiliary data is updated or not.

The terminal is used for receiving the paging message sent downwardly by the system side, and is also used for determining whether it is needed to obtain the location service auxiliary data or not according to the notification information.

The notification information is implemented by using a flag bit. If the flag bit is true, it indicates that the location service auxiliary data is updated; and if the flag bit is false, it indicates that the location service auxiliary data is not updated.

The location service auxiliary data is the ephemeris chart, modified data or encrypted information during the positioning of the satellite, which is sent downwardly to the terminal in the form of a system message by the network side.

The network side is also used for sending downwardly a system main information block and a system information block through the broadcast channel. The system information block comprises a system information block 1 and a system information block which carries the service location auxiliary data, wherein the system information block 1 has the scheduling (modulation) information of all subsequent system information blocks, such as a system information block 2, a system information block 3 and .... Certainly, the system information block I also has the scheduling (modulation) information of the system information block which carries the service location auxiliary data.

The terminal is also used for reading the system main information block and the system information block 1, and reading the system information block which carries the service location auxiliary data according to the scheduling (modulation) information in the system information block 1.

By using the method and the system of the present invention, the UE can be timely notified to obtain the system message if the LCS system message is modified, namely updated, under the condition that the LCS auxiliary data is sent downwardly in the form of a system message. At the same time, the present method does not influence the modification notification of the existing system message, and for the UE which does not have the LCS ability, the system message of the LCS auxiliary data does not need to be read, thus saving the energy consumption of batteries.

### Industrial Applicability Brief

Compared to the prior art, by using the method and the system of the present invention, the UE can be timely notified to obtain the system message if the LCS system message is modified, namely updated, under the condition that the LCS auxiliary data is sent downwardly in the form of a system message. At the same time, the present method does not influence the modification notification of the existing system message, and for the UE which does not have the LCS ability, the system message of the LCS auxiliary data does not need to be read, thus saving the energy consumption of batteries.

## Claims

1. A method for notifying the updating of location service auxiliary data, **characterized by**, comprising:
sending downwardly by the network side a paging message to a terminal, the paging message carrying notification information used to indicate whether location service auxiliary data is updated or not; and
determining by the terminal whether it is needed to obtain the location service auxiliary data or not according to the notification information.

2. The method according to Claim 1, **characterized in that** the notification information is implemented by using a flag bit wherein if the flag bit is true, it indicates that the location service auxiliary data has been updated; and if the flag bit is false, it indicates that the location service auxiliary data is not updated; and the step of determining by the terminal whether it is needed to obtain the location service auxiliary data or not according to the notification information is implemented by the following manners:
if the terminal has a location service ability and the flag bit is true, the terminal determines that it is needed to obtain the location service auxiliary data;
if the terminal has the location service ability and the flag bit is false, the terminal determines that it is not needed to obtain the location service auxiliary data; and
if the terminal does not have the location service ability, the flag bit is ignored.

3. The method according to Claim 1, **characterized in that** the location service auxiliary data refers to a ephemeris chart, modified data or encrypted information during the positioning of a satellite, which is sent downwardly by the network side to the terminal in the form of a system message.

4. A device for notifying the updating of location service auxiliary data, **characterized in that** the device for notifying the updating of location service auxiliary data is configured to send downwardly a paging message to the terminal, the paging message carrying notification information which is used to indicate whether location service auxiliary data is updated or not.

5. The device for notifying the updating of location service auxiliary data according to Claim 4, **characterized in that**
the notification information is implemented by using a flag bit, wherein if the flag bit is true, it indicates that the location service auxiliary data is updated; and if the flag bit is false, it indicates that the location service auxiliary data is not updated.

6. The device according to Claim 4, **characterized in that** the location service auxiliary data is a ephemeris chart, modified data or encrypted information during the positioning of a satellite, which is sent to the terminal in the form of a system message by the device for notifying the updating of location service auxiliary data.

7. A system for notifying the updating of location service auxiliary data, **characterized by**, comprising:
the device for notifying the updating of location service auxiliary data according to any of Claims of 4-6; and
a terminal, configured to receive a paging message sent downwardly by the device for notifying the updating of location service auxiliary data, and determine whether it is needed to re-obtain the location service auxiliary data or not according to notification information in the paging message.

8. The system for notifying the updating of location service auxiliary data according to Claim 7, **characterized in that** the notification information is implemented by using a flag bit, wherein if the flag bit is true, it indicates that the location service auxiliary data is updated; and if the flag bit is false, it indicates that the location service auxiliary data is not updated; and the terminal is further configured to determine that it is needed to obtain the location service auxiliary data when the terminal has a location service ability and the flag bit is true; configured to determine that it is not needed to obtain the location service auxiliary data when the terminal has the location service ability and the flag bit is false; and configured to ignore the flag bit when the terminal does not have the location service ability.

9. A method for obtaining location service auxiliary data, **characterized by**, comprising:
sending by the network sides a paging message to a terminal, the paging message carrying a flag bit and the flag bit used for indicating whether the location auxiliary data is updated or not, wherein if the flag bit is true, it indicates that the location service auxiliary data is updated; otherwise, it indicates that the location service auxiliary data is not updated; and
determining by the terminal whether it is needed to obtain the location service auxiliary data or not according to the flag bit.

10. The method according to Claim 9, **characterized in that** the step of determining by the terminal whether it is needed to obtain the location service auxiliary data or not according to the flag bit is implemented in following manner:
if the terminal has a location service ability and the flag bit is true, the terminal determines that it is needed to obtain the location service auxiliary data;
if the terminal has the location service ability and the flag bit is false, the terminal determines that it is not needed to obtain the location service auxiliary data; and
if the terminal does not have the location service ability, the flag bit is ignored.

11. The method according to Claim 10, **characterized in that** after the step that the terminal determines that it is needed to obtain the location service auxiliary data according to the flag bit, the method further comprises that the terminal obtains the location service auxiliary data from system information sent by the network side.

12. The method according to Claim 11, **characterized in that** the system information is sent to the terminal by the network side via a broadcast channel; the system information comprises a system information block which carries the location service auxiliary data and a system information block 1; the step of obtaining by the terminal the location service auxiliary data from the system information comprises:
the terminal reads scheduling information of the system information block which carries the location service auxiliary data through a scheduling information unit in the system information block 1, and reads the system information block which carries the location service auxiliary data according to the scheduling information to obtain the location service auxiliary data.

13. A device for obtaining location service auxiliary data, **characterized in that** the device for obtaining location service auxiliary data is configured to send a paging message to a terminal, wherein the paging message carries a flag bit used for indicating whether location service auxiliary data is updated or not wherein if the flag bit is true, it indicates that the location service auxiliary data is updated; otherwise, it indicates that the location service auxiliary data is not updated.

14. The device for obtaining location service auxiliary data according to Claim 13, **characterized in that**
the device for obtaining location service auxiliary data is further configured to send downwardly a system information block through a broadcast channel, the system information block comprising a system information block 1 and a system information block which carries location service auxiliary data.

15. A system for obtaining location service auxiliary data, **characterized by**, comprising:
the device for obtaining location service auxiliary data according to Claim 14; and
a terminal, configured to receive a paging message sent by the device for obtaining the location service auxiliary data, and determine whether it is needed to obtain the location service auxiliary data or not according to a flag bit in the paging message, and read the system information block 1 when it is determined that it is needed to obtain the location service auxiliary data, and read a system information block which carries location service auxiliary data according to scheduling information in the system information block 1 to obtain the location service auxiliary data.
